(19) Europäisches Patentamt

European Patent Office

Office européen des brevets

(11) Veröffentlichungsnummer: **0 273 238 B1**

(12) **EUROPÄISCHE PATENTSCHRIFT**

(45) Veröffentlichungstag der Patentschrift: **24.03.93**

(21) Anmeldenummer: **87118014.7**

(22) Anmeldetag: **05.12.87**

(51) Int. Cl.⁵: **C08F 26/10**, C08F 2/38

(54) **Verfahren zur Herstellung von Vinylpyrrolidon-Polymerisaten.**

(30) Priorität: **13.12.86 DE 3642633**

(43) Veröffentlichungstag der Anmeldung:
**06.07.88 Patentblatt 88/27**

(45) Bekanntmachung des Hinweises auf die
Patenterteilung:
**24.03.93 Patentblatt 93/12**

(84) Benannte Vertragsstaaten:
**CH DE FR GB LI**

(56) Entgegenhaltungen:
**EP-A- 0 104 042**
**DE-A- 2 514 127**

(73) Patentinhaber: **BASF Aktiengesellschaft**
**Carl-Bosch-Strasse 38**
**W-6700 Ludwigshafen(DE)**

(72) Erfinder: **Nuber, Adolf, Dr.**
**Kurt-Schumacher-Strasse 11**
**W-6737 Boehl-Iggelheim(DE)**
Erfinder: **Denzinger, Walter**
**Wormser Landstrasse 65**
**W-6720 Speyer(DE)**
Erfinder: **Sanner, Axel, Dr.**
**Lorscher Ring 2 c**
**W-6710 Frankenthal(DE)**

**Beschreibung**

Die Erfindung betrifft ein Verfahren zur Herstellung von hydrazinfreien und in Wasser und organischen Lösungsmitteln klar löslichen N-Vinyl-2-pyrrolidon-Polymerisaten durch Polymerisation mit Di-tert-butylperoxid in wäßriger Lösung.

N-Vinyl-2-pyrrolidon (VP) kann in Wasser oder in organischen Lösungsmitteln polymerisiert werden. Vor allem aus ökonomischen und ökologischen Gründen ist Wasser in der Regel vorzuziehen.

Das bekannteste Verfahren zur Polymerisation von VP in Wasser benutzt Wasserstoffperoxid als Initiator unter Zusatz von Ammoniak zur Einstellung des pH-Wertes, (DE-B 922 378). Dabei entsteht in geringer Menge Hydrazin, was in vielen Fällen unerwünscht ist (Pharmacopeial Forum der US Pharmacopeial Convention, Inc., Rochville, Md., März-April 1985, S. 218). Ersetzt man Ammoniak durch Natronlauge, erhält man zwar hydrazinfreie Produkte, doch enthalten diese einen erhöhten Anteil an anorganischen Lösungsmitteln zu Trübungen führen kann (deutsche Patentanmeldung P 35 32 747.2). Es ist auch schon vorgeschlagen worden (EP-A 104 042), mit t-Butylperpivalat als Starter zu polymerisieren. Dabei entstehen jedoch in der Regel keine in Wasser klar löslichen Polymerisate.

Der Erfindung lag daher die Aufgabe zugrunde, ein Verfahren zur Herstellung von VP-Polymerisaten zu entwickeln, das diese Nachteile vermeidet.

Die Lösung dieser Aufgabe besteht in einem Verfahren zur Herstellung von hydrazinfreien und in Wasser und organischen Lösungsmitteln klar löslichen VP-Polymerisation, die mindestens 50, vorzugsweise mindestens 60, insbesondere 70 bis 100 Gew.-% VP einpolymerisiert enthalten, wobei man zur 10 bis 80, vorzugsweise 15 bis 70 gew.-%igen wäßrigen Monomerlösung 0,1 bis 3, vorzugsweise 0,2 bis 2 Gew.-%, bezogen auf Monomeres, gegebenenfalls auf die Monomermischung, Di-tert-butylperoxid, gegebenenfalls in bis zum 100fachen verdünnter Lösung in einem organischen Lösungsmittel oder wäßriger Emulsion, zugibt und die Mischung unter Rühren 1 bis 15, vorzugsweise 2 bis 10 Stunden auf 100 bis 160°C, vorzugsweise 110 bis 145°C hält, wobei man das gewünschte Molekulargewicht durch Zusatz von 0 bis 100 Gew.-%, bezogen auf Monomeres, eines Reglers, vorzugsweise Isopropanol, im K-Wert-Bereich nach Fikentscher (H. Fikentscher, Cellulosechemie 13 (1932), Seiten 58-64 und 71-74) von 10 bis 100, vorzugsweise 20 bis 90, einstellt.

Die Durchführung der Polymerisation erfolgt erfindungsgemäß in der Weise, daß man einen Teil der Komponenten des Ansatzes in einen auf 200 bar geprüften Druckbehälter eindosiert, die Luft durch Evakuieren oder durch Durchblasen eines Inertgases entfernt und die Temperatur auf 100 bis 160°C, vorzugsweise 110 bis 145°C steigert. Die Dosierung der Restmenge erfolgt in der Weise, daß man Monomere, Lösungsmittel, Regler und Starter in 1 bis 7 Stunden zulaufen läßt.

Die Einstellung des K-Werts erfolgt auf folgende Weise:

1. Durch Wahl von Art und Menge des eingesetzten Reglers.

2. Durch Wahl der Peroxidmenge; große Mengen ergeben kleine K-Werte.

3. Durch gezielte Einstellung der Monomerkonzentration; eine Erhöhung der Monomerkonzentration bewirkt auch eine Erhöhung des K-Wertes.

4. Durch Wahl der Polymerisationstemperatur; durch eine Temperaturerhöhung wird der K-Wert abgesenkt.

Die Zugabe von Puffersubstanzen während der Polymerisation ist im allgemeinen nicht erforderlich. Vielfach ist es jedoch zweckmäßig, geringe Mengen, vorzugsweise 0,1 bis 1 Gew.-%, bezogen auf Monomeres, eines Amins, z.B. Triethylamin, zuzusetzen.

Um eine rein wäßrige Polymerisatlösung zu erhalten, destilliert man nach der Polymerisation das organische Lösungsmittel (Regler) ab. Vielfach ist es von Vorteil, eine Wasserdampfdestillation durchzuführen, um gleichzeitig auch andere flüchtige Anteile, die z.B. aus VP oder dem Starter stammen, zu entfernen.

Das Verfahren ist diskontinuierlich und kontinuierlich durchführbar. Bei der diskontinuierlichen Fahrweise ist es - besonders bei höherer Monomerkonzentration - zweckmäßig, nur einen Teil des (der) Monomeren vorzulegen und den Rest allmählich zulaufen zu lassen. Im Fall von höheren Monomerkonzentrationen sollte die Vorlage verdünnter sein als der Zulauf.

Das Verfahren hat besondere Bedeutung für die Herstellung von Homopolymerisaten des VP, es ist jedoch ebenso gut möglich, auch Copolymerisate des VP herzustellen, indem man VP zusammen mit anderen ethylenisch ungesättigten, mit VP copolymerisierbaren Monomeren polymerisiert.

Als Comonomere kommen vor allem Vinylester mit Carbonsäuren mit 1 bis 4 Kohlenstoffatomen, vorzugsweise Vinylacetat und Vinylpropionat, (Meth-)Acrylsäure und deren Derivate, bes. deren Ester mit $C_{1-4}$-Alkoholen in Betracht, beispielsweise Methyl(meth)acrylat, Hydroxyethyl- und Hydroxypropyl(meth)-acrylat, Acrylamid und Methacrylamid, ferner Vinylimidazol und quaternisiertes Vinylimidazol sowie Vinylcaprolactam, oder Mischungen der genannten Monomeren. Bei der Auswahl der Art und Menge der Comonomeren ist auf die Wasserlöslichkeit des Copolymerisates zu achten.

Das Di-tert-butylperoxid wird zur Erleichterung der Dosierung, insbesondere bei allmählicher Zugabe über einen längeren Zeitraum, zweckmäßig verdünnt. Dies kann entweder mit Hilfe eines (vorzugsweise wasserlöslichen) organischen Lösungsmittels, z.B. Isopropanol, Ethanol, Methanol oder mit Hilfe von Wasser und einem Dispergiermittel geschehen. Zweckmäßig wählt man ein klar wasserlösliches Dispergiermittel, beispielsweise ein ionisches.

Als Molekulargewichtsregler werden zweckmäßig Alkohole, vorzugsweise sekundäre Alkohole, insbesondere Isopropanol, ferner Thioverbindungen wie Dodecylmercaptan, 2-Mercaptoethanol eingesetzt.

Der Erfindungsgedanke beruht auf der kombinierten Anwendung von Di-tert-butylperoxid als Starter und einem wäßrigen Polymerisationsmedium.

Mit dem wäßrigen Medium ist Wasser gemeint, das gegebenenfalls bis zu 50 Gew.-% eines Molekulargewichtsreglers enthält.

Der Umsatz an VP liegt im allgemeinen bei mehr als 99,9 %.

Die in den Beispielen genannten Teile und Prozente beziehen sich auf das Gewicht.

Die Messung des K-Wertes erfolgte stets 1%ig in Wasser bei 25°C.

Beispiel 1

In einem Druckreaktor mit Rühren wurden 45 Teile Wasser, 183 Teile Isopropanol, 50 Teile VP und 0,3 Teile Di-tert-butylperoxid vorgelegt. Der Reaktor wurde druckdicht verschlossen und durch 3-maliges Aufpressen und wieder Entspannen von 4 bar Stickstoff weitgehend von Luftsauerstoff befreit. Nun wurde der Reaktorinhalt auf 130°C aufgeheizt, wobei sich ein Druck von 3.8 bar einstellte, anschließend eine Lösung von 450 Teilen VP, 1 Teil Triethylamin und 405 Teilen Wasser sowie eine Lösung von 2,7 Teilen Di-tert-butylperoxid in 117 Teilen Isopropanol bei 130°C jeweils in den in nachfolgender Tabelle aufgeführten Zeiten zugefahren. Anschließend wurde noch ca. 3 h auspolymerisiert, bis der Monomergehalt unter 0,1 % (bezogen auf das eingesetzte Monomere) abgefallen war. Der Ansatz wurde auf 80°C abgekühlt, anschließend durch Einleiten von Wasserdampf das Isopropanol abgetrieben. Nach Erreichen einer Innentemperatur von 98°C wurde noch weiter destilliert, bis weitere 15 Teile Destillat übergegangen waren. Man erhielt eine klare rein wäßrige Lösung.

Tabelle

| Versuch | Zulaufzeiten | K-Wert |
|---------|--------------|--------|
| a | 4 h | 44.3 |
| b | 6 h | 38.9 |

Beispiel 2

Wie bei Beispiel 1a, jedoch war die Polymerisationstemperatur 120°C. Der K-Wert der nahezu farblosen, klaren, wäßrigen Polymerisatlösung betrug 58,3.

Beispiel 3

Wie bei Beispiel 1a, jedoch Anwendung von 0,15 Teilen Di-tert-butylperoxid in der Vorlage und 1,35 Teilen Di-tert-butylperoxid im Zulauf. Nach Ende des Zulaufs wurden zur Nachpolymerisation weitere 0,5 Teile Di-tert-butylperoxid auf einmal zugegeben. Der K-Wert der klaren, wäßrigen Polymerisatlösung betrug 54,6.

Beispiel 4

In einer Apparatur wie bei Beispiel 1 wurden 515 Teile Wasser, 100 Teile Isopropanol, 60 Teile VP und 1,5 Teile Di-tert-butylperoxid vorgelegt. Nach druckdichtem Verschließen des Reaktors wurde 2 mal 4 bar Stickstoff aufgepreßt und wieder entspannt. Der Reaktorinhalt wurde auf 140°C aufgeheizt, wobei sich ein Druck von 5,1 bar einstellte. Danach wurde eine Lösung von 540 Teilen Vinylpyrrolidon in 970 Teilen Wasser und 380 Teilen Isopropanol in 4 h, sowie eine Lösung von 14 Teilen Di-tert-butylperoxid in 120 Teilen Isopropanol in 5 h bei 140°C zugefahren. Anschließend wurde noch 3 Stunden auspolymerisiert. Die Aufarbeitung erfolgte wie in Beispiel 1.

Die ca. 25%ige klare Polymerisatlösung wurde sprühgetrocknet. Das farblose Polymerisat wies einen K-Wert von 24,0 auf.

Beispiel 5

In einem mit Rührer ausgerüsteten Druckreaktor wurden 640 Teile Wasser, 120 Teile VP und 0,5 Teile Di-tert-butylperoxid vorgelegt und durch Aufpressen und wieder Entspannen von 4 bar Stickstoff der Luftsauerstoff weitgehend verdrängt. Nach Aufheizen des Reaktorinhalts auf 130°C, wobei sich ein Druck von 2,1 bar einstellte, wurde eine Lösung von 1080 Teilen Vinylpyrrolidon, 2 Teilen Triethylamin und 1980 Teilen Wasser in 3,5 Stunden sowie eine Emulsion von 5,5 Teilen Di-tert.-butylperoxid in 100 Teilen Wasser (Emulgator 20 Teile Natriumcetylsulfonat) in 4 Stunden bei 130°C zudosiert. Anschließend wurde noch 2,5 h bei 130°C auspolymerisiert, bis der Restmonomerengehalt auf unter 0,1 % (bezogen auf das eingesetzte VP) abgefallen war. Der K-Wert der hochviskosen, farblosen und klaren Polymerisatlösung betrug 80,5.

Beispiel 6

In einem Druckreaktor mit Rührer wurden unter Stickstoff 530 Teile Wasser, 20 Teile Isopropanol, 120 Teile Vinylpyrrolidon und 0,7 Teile Di-tert-butylperoxid vorgelegt und nach Aufheizen auf 130°C eine Lösung von 1080 Teilen VP, 2 Teilen Triethylamin und 1080 Teilen Wasser (Monomerzulauf), sowie eine Lösung von 6,5 Teilen Di-tert.-butylperoxid in 170 Teilen Isopropanol in jeweils 4 Stunden bei 130°C zudosiert. Polymerisationsverlauf und Aufarbeitung erfolgte wie bei Beispiel 1.

Der K-Wert der klaren, farblosen Polymerisatlösung betrug 68,4.

Beispiel 7

Wie Beispiel 6, jedoch zusätzlich 1 Teil Allylalkohol in der Vorlage und 11 Teile Allylalkohol im Monomerzulauf. Der K-Wert der klaren Polymerisatlösung betrug 55,1.

Beispiel 8

Wie Beispiel 6, nur zusätzlich 0,3 Teile Mercaptoethanol in der Vorlage und 2,7 Teile Mercaptoethanol im Monomerzulauf. Der K-Wert der klaren Polymerisatlösung betrug 34,9.

Beispiel 9

In einem Druckreaktor mit Rührer wurden 410 Teile Wasser, 19 Teile Isopropanol, 110 Teile VP und 0,5 Teile Di-tert-butylperoxid vorgelegt und unter Stickstoff auf 125°C aufgeheizt. Anschließend wurde eine Lösung von 730 Teilen VP und 360 Teilen Hydroxypropylacrylat in 1200 Teilen Wasser, sowie eine Lösung von 4,3 Teilen Di-tert.-butylperoxid in 170 Teilen Isopropanol in jeweils 5 Stunden bei 130°C zudosiert. Zum Auspolymerisieren wurde noch 3,5 Stunden auf 130°C nachgeheizt. Die Aufarbeitung erfolgte wie in Beispiel 1 beschrieben.

Der K-Wert der Polymerisatlösung betrug 33,2, der Restmonomerengehalt 0,1 % (bezogen auf Copolymeres).

Beispiel 10

530 Teile Wasser, 20 Teile Isopropanol, 72 Teile VP, 48 Teile Vinylimidazol und 0,6 Teile Di-tert-butylperoxid wurden in einem Druckreaktor mit Rührer unter Stickstoff vorgelegt und auf 130°C aufgeheizt, anschließend eine Lösung von 648 Teilen Vinylpyrrolidon, 432 Teilen Vinylimidazol und 1100 Teilen Wasser, sowie eine Lösung von 5,4 Teilen Di-tert.-butylperoxid und 170 Teilen Isopropanol in 4,5 Stunden, bzw. 5,5 Stunden bei 130°C zudosiert. Polymerisationsverlauf und Aufarbeitung erfolgte wie in Beispiel 1. Der K-Wert der klaren Polymerisatlösung betrug 51,9.

Vergleichsbeispiel

Zum Vergleich der Wasserlöslichkeit wurde aus der EP-A 104 042 das Beispiel 3 nachgestellt. Die erhaltene Polymerisatlösung wurde wie bei dem vorliegenden Beispiel 1 einer Wasserdampfdestillation unterworfen, um das organische Solvens abzutrennen. Die rein wäßrige Polymerisatlösung hatte einen K-Wert von 39,8 und war trüb.

**Patentansprüche**

**1.** Verfahren zur Herstellung von hydrazinfreien und in Wasser und organischen Lösungsmitteln klar löslichen N-Vinyl-2-pyrrolidon-Polymerisaten, die mindestens 50 Gew.-% N-Vinyl-2-pyrrolidon einpolymerisiert enthalten, dadurch gekennzeichnet, daß man zur 10- bis 80-gewichtsprozentigen wäßrigen Monomerlösung 0,1 bis 3 Gew.-%, bezogen auf Monomeres, Di-tert-butylperoxid, gegebenenfalls in bis zum 100fachen verdünnter Lösung oder Emulsion, zugibt und die Mischung unter Rühren 1 bis 15 Stunden auf 100 bis 160°C hält, wobei man das gewünschte Molekulargewicht durch Zusatz von 0 bis 100 Gew.-%, bezogen auf Monomeres, eines Reglers im K-Wert-Bereich nach Fikentscher von 10 bis 100 einstellt.

**2.** Verfahren nach Anspruch 1, dadurch gekennzeichnet, daß man als Regler Isopropanol einsetzt.

**Claims**

**1.** A process for the preparation of a hydrazine-free N-vinyl-2-pyrrolidone polymer which dissolves in water and organic solvents to give a clear solution and contains not less than 50% by weight of N-vinyl-2-pyrrolidone as copolymerized units, wherein from 0.1 to 3% by weight, based on monomer, of di-tert-butyl peroxide, if necessary diluted up to 100 times in solution or emulsion, are added to a 10 to 80% strength by weight aqueous monomer solution, and the stirred mixture is kept for from 1 to 15 hours at from 100 to 160°C, the desired molecular weight being set in the Fikentscher K value range of from 10 to 100 by adding from 0 to 100% by weight, based on monomer, of a regulator.

**2.** A process as claimed in claim 1, wherein the regulator used is isopropanol.

**Revendications**

**1.** Procédé de préparation de polymérisats de N-vinyl-2-pyrrolidone, exempts d'hydrazine et solubles limpides dans l'eau et les solvants organiques, qui contiennent, en polymérisation, au moins 50 % en poids de N-vinyl-2-pyrrolidone, caractérisé par le fait qu'à 10 à 80 pour cents en poids de solution de monomère aqueuse, on ajoute 0,1 à 3 % en poids, rapporté au monomère, de di-terbutylperoxyde, éventuellement en solution ou émulsion diluée jusqu'au centuple, et l'on maintient le mélange sous agitation pendant 1 à 15 heures à une température de 100-160 degrés C, le poids moléculaire souhaité étant réglé dans la zone d'indice K selon Fikentsoler de 10 à 100, par addition de 0 à 100 % en poids, rapporté au monomère, d'un régulateur.

**2.** Procédé selon la revendication 1, caractérisé par le fait que l'on utilise, comme régulateur, de l'isopropanol.